# EUROPEAN PATENT SPECIFICATION

(11) **EP 2 680 478 B1**
(45) Date of publication and mention of the grant of the patent: **26.07.2017**
(21) Application number: 11862737.1
(22) Date of filing: 14.11.2011
(51) Int. Cl.: H04L 1/16, H04L 1/00

(54) **METHOD, DEVICE, AND SYSTEM FOR LINK ADAPTATION**
VERFAHREN, VORRICHTUNG UND SYSTEM ZUR VERBINDUNGSANPASSUNG
PROCÉDÉ, DISPOSITIF ET SYSTÈME D'ADAPTATION DE LIAISON

(30) Priority: 25.03.2011 CN 201110074122
(43) Date of publication of application: 01.01.2014
(73) Proprietor: Huawei Technologies Co., Ltd., Longgang District Shenzhen, Guangdong 518129 (CN)
(72) Inventor: YANG, Lvxi, Shenzhen Guangdong 518129 (CN); JI, Baofeng, Shenzhen Guangdong 518129 (CN); HUANG, Yongming, Shenzhen Guangdong 518129 (CN); LI, Yunbo, Shenzhen Guangdong 518129 (CN)
(74) Representative: Pfenning, Meinig & Partner mbB
(86) International application number: PCT/CN2011/082142
(87) International publication number: WO 2012/129909

(56) References cited:
- CN-A- 1 801 686
- CN-A- 101 981 855
- US-A1- 2006 268 886
- US-A1- 2009 147 734
- XI, CHEN ET AL.: 'Practical Rate Adaptation in Mobile Environments.' IEEE INTERNATIONAL CONFERENCE ON PERVASIVE COMPUTING AND COMMUNICATIONS. 08 May 2009, pages 1 - 10, XP031453114

## Description

### FIELD OF TECHNOLOGY

The present invention relates to the communications field, and in particular, to a method, an apparatus, and a system for link adaptation in the communications field.

### BACKGROUND

Wireless local area network standards (IEEE 802.11) support a mechanism called transmission opportunity (Transmission Opportunity, abbreviated as TXOP). The transmission opportunity refers to a case where when a user obtains a channel access opportunity by contention, the user is capable of consecutively transmitting a plurality of data frames to one or more users within a specific period. The existing 802.11 standards support a single-user transmission opportunity (Single-User TXOP, abbreviated as SU TXOP), and the new standard 802.11ac further supports a multi-user transmission opportunity (Multi-Users TXOP, abbreviated as MU TXOP). In the SU TXOP, a beamforming (Beamforming) technology may be used or may not be used. In the MU TXOP, the beamforming technology must be used to differentiate data of different users.

In the TXOP mechanism specified in the existing standards, a transmission opportunity holder firstly requests, before data transmission, a receiving apparatus to feed back signal-to-noise ratio (Signal to Noise Ratio, abbreviated as SNR) information. In the standards, the signal-to-noise ratio information is generally represented by a ratio of signal power to
interference power and noise power. The transmission opportunity holder performs multi-frame data transmission to the receiving apparatus according to the signal-to-noise ratio information.

However, during multi-frame data transmission, the receiving apparatus no longer feeds back new signal-to-noise ratio information of a link to the transmission opportunity holder. Therefore, in one aspect, as the time interval between data transmission and obtaining of the signal-to-noise ratio information increases, the actual value of the signal-to-noise ratio changes; in another aspect, in the MU TXOP, the transmission opportunity holder obtains, before data transmission, the signal-to-noise ratio without considering signal interference between a plurality of receiving users, but the signal interference between the plurality of users cannot be completely eliminated during the actual communication process. Factors in these two aspects result in that the signal-to-noise ratio information received by the transmission opportunity holder before data transmission fails to be updated and corrected timely, and therefore fails to reflect the actual signal-to-noise ratio during data transmission. This remarkably affects throughput of a system.

US 2006/0268886 A1 relates to a method and system for enhancing the capabilities of wireless local area networks (WLAN) control frames in general and particularly block acknowledgement frames, such as block acknowledgement request frames and block acknowledgement response frames.

US 2009/0147734 A1 relates to a communication system which can control a data transmission properly and to which a delayed block acknowledgement mode is applied.

### SUMMARY

Embodiments of the present invention provide a method, an apparatus, and a system for link adaptation so that a transmission opportunity holder is capable of timely and accurately obtaining link adaptation information during data transmission, thereby remarkably improving throughput of the system.

This effect is in particular achieved by the method for link adaption according to claim 1, the apparatus for link adaption according to claim 7 and the system for link adaption according to claim 11. The respective dependent claims describe advantageous embodiments of the method for link adaption according to claim 1 and the apparatus for link adaption according to claim 7.

Based on the technical solutions, with the method, apparatus, and system for link adaptation according to the embodiments of the present invention, link adaptation update information is fed back in a block acknowledgment frame so that a transmission opportunity holder is capable of timely and accurately obtaining link adaptation information during data transmission and performing link adaptation accordingly, thereby remarkably improving throughput of the system.

### BRIEF DESCRIPTION OF THE DRAWINGS

To illustrate the technical solutions in the embodiments of the present invention more clearly, the accompanying drawings required for describing the embodiments are briefly introduced in the following. Apparently, the accompanying drawings in the following description merely show some embodiments of the present invention, and persons of ordinary skill in the art may still derive other drawings from these accompanying drawings without creative efforts.
FIG. 1 is a schematic diagram of a method for link adaptation according to an embodiment of the present invention;
FIG. 2 is a schematic structural diagram of a block acknowledgment frame according to an embodiment of the present invention;
FIG. 3 is another schematic structural diagram of a block acknowledgment frame according to an embodiment of the present invention;
FIG. 4 is another schematic diagram of a method for link adaptation according to an embodiment of the present invention;
FIG. 5 is a schematic diagram of an apparatus for link adaptation according to an embodiment of the present invention;
FIG. 6 is another schematic diagram of an apparatus for link adaptation according to an embodiment of the present invention;
FIG. 7 is a schematic diagram of a system for link adaptation according to an embodiment of the present invention; and
FIG. 8 is another schematic diagram of a system for link adaptation according to an embodiment of the present invention.

### DETAILED DESCRIPTION

The technical solutions in the embodiments of the present invention are clearly and completely described in the following with reference to the accompanying drawings in the embodiments of the present invention. Apparently, the embodiments to be described are merely a part rather than all of the embodiments of the present invention. All other embodiments obtained by persons of ordinary skill in the art based on the embodiments in the present invention without creative efforts shall fall within the protection scope of the present invention.

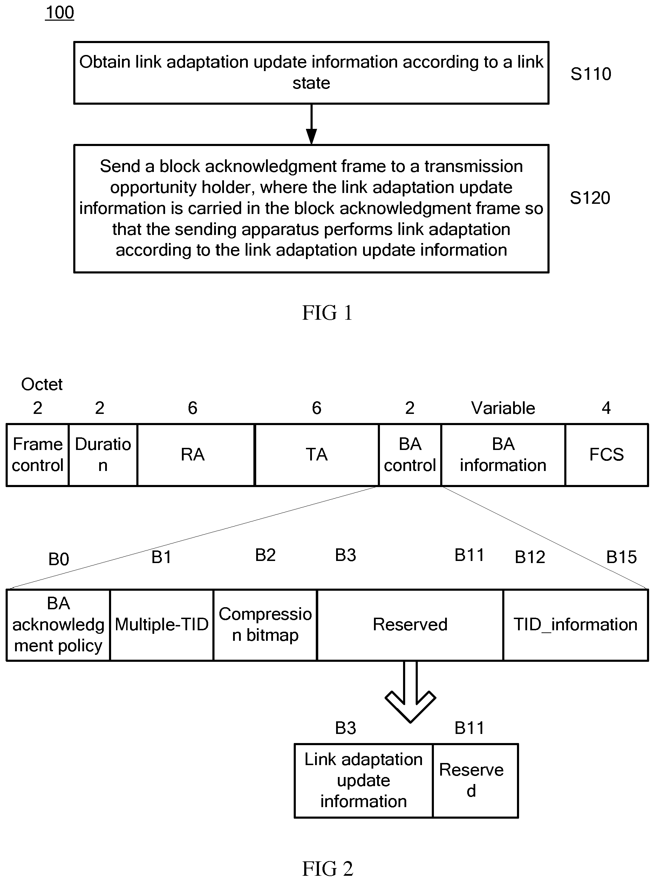

FIG. 1 shows a schematic diagram of a method 100 for link adaptation according to an embodiment of the present invention. As shown in FIG. 1, the method 100 includes the following:
S110. Obtain link adaptation update information according to a link state.
S120. Send a block acknowledgment frame to a transmission opportunity holder, where the link adaptation update information is carried in the block acknowledgment frame so that the transmission opportunity holder performs link adaptation according to the link adaptation update information.

During data transmission between a transmission opportunity holder and a receiving apparatus, the receiving apparatus may obtain the link adaptation update information according to the link state, and then send a block acknowledgment (Block Acknowledgment, abbreviated as BA) frame to the transmission opportunity holder. The link adaptation update information is carried in the block acknowledgment frame so that the transmission opportunity holder is capable of timely and accurately obtaining latest link adaptation information and further performing link adaptation according to the link adaptation update information.

It should be understood that in the standards supporting the TXOP, a receiving apparatus may be a transmission opportunity responder (that is, a TXOP Responder), and a sending apparatus may be a transmission opportunity holder (that is, a TXOP Holder). The embodiments of the present invention are described with reference to the transmission opportunity responder and the transmission opportunity holder, which are for the illustration purpose only and should not constitute any limitation to the present invention. In addition, the embodiments of the present invention should not be limited thereto.

Generally, the receiving apparatus uses a BA frame to acknowledge a plurality of consecutive data frames received and respond to them. A bitmap (bitmap) in the BA frame indicates detailed reception of a plurality of data frames. However, in the embodiments of the present invention, the receiving apparatus also carries the obtained link adaptation update information in the block acknowledgment frame, and sends the BA frame to the transmission opportunity holder so that the transmission opportunity holder is capable of timely and accurately obtaining link adaptation information during data transmission. This prevents the impact caused by inaccurate link adaptation information to throughput of a system.

Based on the technical solution, with the method for link adaptation according to the embodiment of the present invention, link adaptation update information is fed back in a block acknowledgment frame so that a transmission opportunity holder is capable of timely and accurately obtaining link adaptation information during data transmission and performing link adaptation accordingly, thereby remarkably improving throughput of a system.

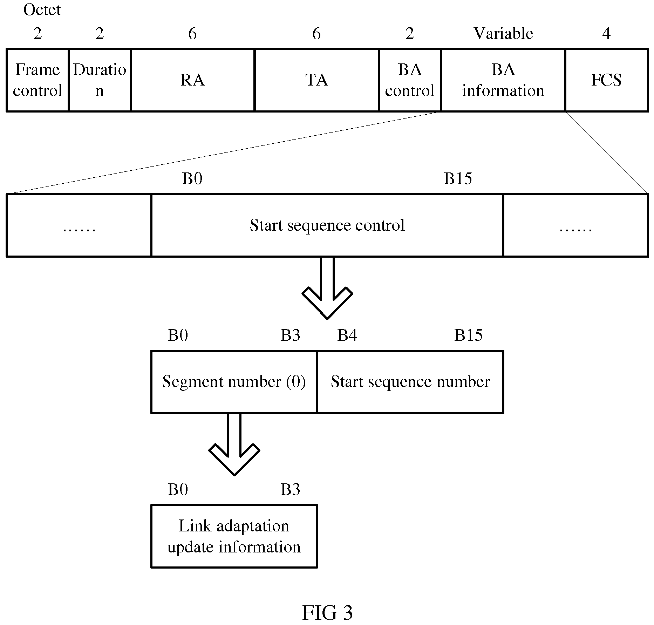

In the embodiment of the present information, the link adaptation update information may be carried in a block acknowledgment control field of the block acknowledgment frame or a start sequence control field of the block acknowledgment frame. FIG. 2 and FIG. 3 show a schematic structural diagram of a block acknowledgment control field of the block acknowledgment frame and a schematic structural diagram of a start sequence control field of the block acknowledgment frame, respectively. RA indicates a receiver address, TA indicates a transmitter address, FCS indicates a frame check sequence, and TID indicates a transmission identifier.

As shown in FIG. 2, a BA control field of a BA frame has 16 bits, where 9 bits are reserved bits (B3 to B11 shown in FIG. 2). The 9 bits may be used to carry the link adaptation update information. As shown in FIG. 3, in the BA frame, BA information with a variable length includes a start sequence control field whose length is 16 bits (B0 to B15 shown in FIG. 3). Four bits B0 to B3 in the start sequence control field may also be used to carry the link adaptation update information.

In the embodiment of the present invention, the link adaptation update information may include signal-to-noise ratio information of a link. The signal-to-noise ratio information may include one or a plurality of: total average signal-to-noise ratio, total average signal-to-noise ratio correction value, average signal-to-noise ratio of each space-time stream, average signal-to-noise ratio correction value of each space-time stream, average signal-to-noise ratio of at least two adjacent space-time streams, and average signal-to-noise correction value of at least two adjacent space-time streams.

The total average signal-to-noise ratio indicates the ratio of the sum of average signal-to-noise ratios of all space-time streams to the total number of space-time streams, and the total average signal-to-noise ratio is used to comprehensively reflect link adaptation information. The total average signal-to-noise ratio correction value indicates the difference between a current total average signal-to-noise ratio and a total average signal-to-noise ratio reference value, where the total average signal-to-noise ratio reference value may be a total average signal-to-noise ratio fed back previously, or a total average signal-to-noise ratio fed back before data transmission.

An average signal-to-noise ratio of each space-time stream indicates the ratio of the sum of signal-to-noise ratios of all subcarriers of each space-time stream to the total number of all subcarriers of the space-time stream, and an average signal-to-noise ratio of each space-time stream is used to reflect a signal-to-noise ratio of each space-time stream and thus reflect link adaptation information. An average signal-to-noise ratio correction value of each space-time stream indicates the difference between a current average signal-to-noise ratio of each space-time stream and an average signal-to-noise ratio reference value of each space-time stream, where an average signal-to-noise ratio reference value of each space-time stream may be an average signal-to-noise ratio of each space-time stream fed back previously, or an average signal-to-noise ratio of each space-time stream fed back before data transmission.

The average signal-to-noise ratio of at least two adjacent space-time streams indicates the ratio of the sum of average signal-to-noise ratios of at least two adjacent space-time streams to the number of at least two adjacent space-time streams, and the average signal-to-noise ratio of at least two adjacent space-time streams is used to reflect the signal-to-noise ratios of the at least two adjacent space-time streams. The average signal-to-noise ratio correction value of at least two adjacent space-time streams indicates the difference between the current average signal-to-noise ratio of at least two adjacent space-time streams and the average signal-to-noise ratio reference value of at least two adjacent space-time streams, where the average signal-to-noise ratio reference value of the at least two adjacent space-time streams may be an average signal-to-noise ratio of at least two space-time streams fed back previously, or an average signal-to-noise ratio of at least two space-time streams fed back before data transmission.

In the embodiment of the present invention, the link adaptation update information may further include modulation and coding scheme (Modulation and Coding Scheme, abbreviated as MCS) information. The modulation and coding scheme information may include one or a plurality of: modulation and coding scheme value and modulation and coding scheme correction value. The modulation and coding scheme value is used to determine a modulation type and a coding rate when it is determined to transmit data. An MCS value directly determines the transmission rate of a link. The modulation and coding scheme correction value indicates the difference between a current modulation and coding scheme value and a modulation and coding scheme reference value, where the modulation and coding scheme reference value may be a modulation and coding scheme value fed back previously, or a modulation and coding scheme value fed back before data transmission.

An 802.11ac standard is used as an example for description. An MCS includes 10 states in total. Table 1 shows an MCS value, a modulation type, and a coding rate corresponding to each state. BPSK indicates binary phase shift keying (Binary Phase Shift Keying), QPSK indicates quadrature phase shift keying (Quadrature Phase Shift Keying), and QAM indicates quadrature Amplitude modulation (Quadrature Amplitude Modulation).

**Table 1**

| MCS Value | Modulation Type | Coding Rate |
|---|---|---|
| 0 | BPSK | 1/2 |
| 1 | QPSK | 1/2 |
| 2 | QPSK | 3/4 |
| 3 | 16-QAM | 1/2 |
| 4 | 16-QAM | 3/4 |
| 5 | 64-QAM | 2/3 |
| 6 | 64-QAM | 3/4 |
| 7 | 64-QAM | 5/6 |
| 8 | 256-QAM | 3/4 |
| 9 | 256-QAM | 5/6 |

For example, if a receiving apparatus determines that a current MCS value is 5, and link adaptation update information is fed back in the manner of feeding back the MCS value, the receiving apparatus may use four bits to fed back the link adaptation update information, for example, carry the link adaptation update information "0101" in a BA control field or start sequence control field of a BA frame. Specifically, "0101" may be, for example, carried in B3 to B6 shown in FIG. 2, or carried in B0 to B3 shown in FIG. 3.

For example, if the receiving apparatus determines that the current MCS value is 5, the MCS value fed back previously is 3, and the link adaptation update information is fed back in the manner of feeding back the MCS value, then the receiving apparatus may use one bit to indicate increase or decrease of the MCS value, and use two bits to indicate the amount of increase or decrease of the MCS value. For example, "110" is used to indicate the link adaptation update information, where the first bit "1" indicates increase of the MCS value, and the second to third bits "10" indicate the amount of the change of the MCS value is 2. Specifically, "110" may be, for example, carried in B3 to B5 shown in FIG. 2, or carried in B0 to B2 shown in FIG. 3.

It should be understood that, in the embodiment of the present invention, the link adaptation update information may further include signal-to-noise ratio information of a link, and modulation and coding scheme information.

With the method for link adaptation according to the embodiment of the present invention, link adaptation update information is fed back in a block acknowledgment frame so that a transmission opportunity holder is capable of timely and accurately obtaining link adaptation information during data transmission and performing link adaptation accordingly, thereby remarkably improving throughput of a system.

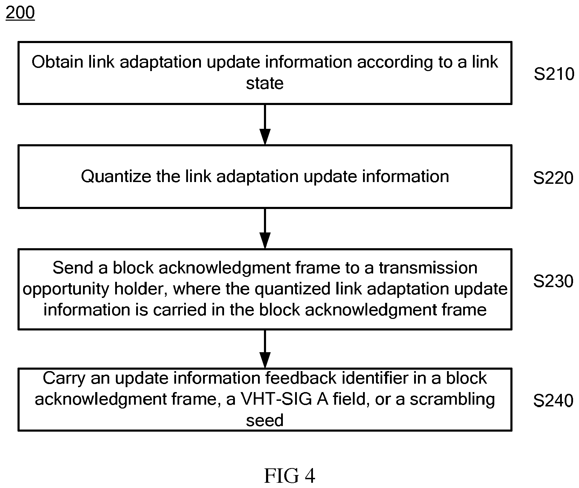

FIG. 4 shows a schematic diagram of a method 200 for link adaptation according to another embodiment of the present invention. As shown in FIG. 4, the method 200 includes:
In S210, a receiving apparatus obtains link adaptation update information according to a link state. The link adaptation update information may include signal-to-noise ratio information of a link, and/or modulation and coding scheme information.

When the link adaptation update information includes the signal-to-noise ratio information of the link, the receiving apparatus may obtain the signal-to-noise ratio of the link in multiple manners according to the link state. For example, the receiving apparatus detects channel state information by using a training sequence, may obtain the power of noise according to the channel state information in combination with received signals, and thus divide signal power by noise power to obtain the signal-to-noise ratio of the link. When the link adaptation update information includes the modulation and coding scheme information, the receiving apparatus may also obtain the modulation and coding scheme information in multiple manners according to the link state. For example, the receiving apparatus may determine a modulation and coding scheme value according to the value of a signal-to-noise ratio. A higher signal-to-noise ratio allows selection of a larger modulation and coding scheme value, so that the link has high transmission efficiency, thereby improving throughput of a system.

In S220, the receiving apparatus quantizes the link adaptation update information so that the link adaptation update information is carried in the BA frame. The quantization refers to a round-off operation for the quotient obtained when the data to be processed is divided by a predetermined step. A detailed description is given by using an example that the link adaptation update information includes the total average signal-to-noise ratio correction value of the link. For example, the total average signal-to-noise correction value is quantized to four bits by the step of 0.25 dB, where the four bits represent -8 to 7 in a binary number system. For example, if the current total average signal-to-noise ratio is 25.5 dB, and the total average signal-to-noise ratio fed back previously is 27 dB, the total average signal-to-noise ratio correction value is -1.5 dB. The quotient obtained when the total average signal-to-noise ratio correction value is divided by the step is rounded off to obtain -6, that is, the quantization result of the link adaptation update information. If the value after round-off is smaller than -8, the value is marked as -8; similarly, if the value after round-off is greater than 7, the value is marked as 7. By quantization, the link adaptation update information can be more accurately carried by using fewer bits.

In the embodiment of the present invention, the signal-to-noise ratio information may include one or a plurality of: total average signal-to-noise ratio, total average signal-to-noise ratio correction value, average signal-to-noise ratio of each space-time stream, average signal-to-noise ratio correction value of each space-time stream, average signal-to-noise ratio of at least two adjacent space-time streams, and average signal-to-noise correction value of at least two adjacent space-time streams.

For example, after a transmission opportunity responder obtains an SNR on each subcarrier of each space-time stream by using data frames within a TXOP, the transmission opportunity responder takes an average of SNRs on all subcarriers of each space-time stream to obtain an average SNR of each space-time stream, and subtracts an average SNR of each space-time stream, which is fed back previously, from an average SNR of each space-time stream to obtain average SNR correction values whose quantity is the same as that of space-time streams.

In a MU TXOP, each transmission opportunity responder has a maximum of four space-time streams, and therefore an SNR correction value of each space-time stream may be quantized to two bits. In this way, a total of eight bits (B3 to B10 shown in FIG. 2) in the BA control field are required to carry the signal-to-noise ratio information. For example, B3 and B4 carry the average SNR of the first space-time stream; B5 and B6 carry the average SNR of the second space-time stream; B7 and B8 carry the average SNR of the third space-time stream; and B9 and B10 carries the average SNR of the fourth space-time stream.

In an SU TXOP, the transmission opportunity responder has a maximum of eight space-time streams, and a method of feeding back link adaptation update information is combining every two adjacent space-time streams. In this way, four combined space-time streams are obtained. An average SNR correction value of each combined space-time stream is the difference between a half of the sum of the current average SNRs of corresponding two space-time streams and a half of the sum of the average SNRs of the two space-time streams that are fed back previously. Therefore, eight bits (B3 to B10 shown in FIG. 2) in the BA control field may also be used to carry the signal-to-noise ratio information.

In S230, the receiving apparatus sends a block acknowledgment frame to a transmission opportunity holder, where the quantized link adaptation update information is carried in the block acknowledgment frame so that the transmission opportunity holder performs link adaptation according to the link adaptation update information.

Alternatively, the link adaptation update information may be carried in a block acknowledgment control field or a start sequence control field of the block acknowledgment frame. Alternatively, the link adaptation update information may also be carried in both a block acknowledgment control field and a start sequence control field of the block acknowledgment frame.

With the method for link adaptation according to the embodiment of the present invention, link adaptation update information is fed back in a block acknowledgment frame so that a transmission opportunity holder is capable of timely and accurately obtaining link adaptation information during data transmission and performing link adaptation accordingly, thereby remarkably improving throughput of a system.

In the embodiment of the present invention, the method 200 may further include S240. That is, the receiving apparatus carries an update information feedback identifier in the block acknowledgment frame, a VHT-SIG A field, or a scrambling seed, where the update information feedback identifier is used to indicate whether to use a link adaptation update information mechanism or is used to indicate a feedback manner of the link adaptation update information. Alternatively, the update information feedback identifier may be carried in a block acknowledgment control field or a start sequence control field of the block acknowledgment frame.

VHT-SIG A is an indication field in the physical layer, placed before data. VHT-SIG A is transmitted by using fixed settings and is used to indicate transmission setting parameters of data in this data frame. The reserved bits in VHT-SIG A may be used to carry the update information feedback identifier. The scrambling seed is used to initialize a scrambling operation for transmitted data, and has seven bits in total. In a standard version before release of 802.11ac, a seven-bit non-all-zero bit sequence is generated randomly. In the 802.11ac standard, when a dynamic bandwidth indication mode is used, three bits are used to indicate bandwidth-specific information, and the other four bits use a randomly generated four-bit non-all-zero bit sequence; when a static bandwidth indication mode is used, a seven-bit non-all-zero bit sequence is generated randomly. Therefore, the scrambling seed may also be used to carry the update information feedback identifier.

With the method for link adaptation according to the embodiment of the present invention, link adaptation update information is fed back in a block acknowledgment frame so that a transmission opportunity holder is capable of timely and accurately obtaining link adaptation information during data transmission and performing link adaptation accordingly, thereby remarkably improving throughput of a system. In addition, according to the method provided in the embodiment of the present invention, an update information feedback identifier may be used to indicate whether to use a link adaptation update information mechanism or indicate a feedback manner of the link adaptation update information.

The following describes an apparatus and a system for link adaptation according to the embodiments of the present invention.

An embodiment of the present invention may be applicable to a scenario where data transmission is being performed between a station (STA) and an access point (Access Point, abbreviated as AP) in a wireless local area network (Wireless Local Area Networks, abbreviated as WLAN). In specific scenarios, the AP may be considered as a special station. Therefore, the station (STA) and the access point may be a transmitter and a receiver. Therefore, in the following embodiments, the apparatus may be an STA or an AP, and the system may be a WLAN formed by a station (STA) and/or an access point (AP).

In the embodiment of the present invention, a transmitter and a receiver use the method described in the above method embodiments to communicate with each other. The transmitter and the receiver are capable of completing the above methods and processes. Therefore, for details about the method when the transmitter and the receiver are used in the system, reference may be made to the method embodiments.

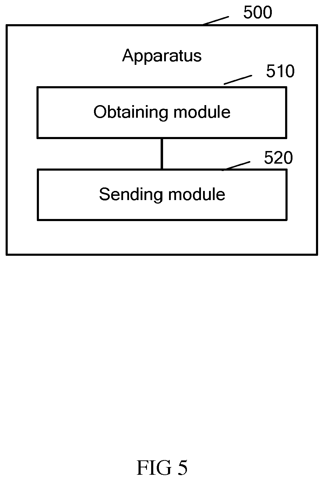

FIG. 5 shows a schematic diagram of an apparatus 500 for link adaptation according to an embodiment of the present invention. As shown in FIG. 5, the apparatus 500 includes: an obtaining module 510 and a sending module 520. The obtaining module 510 is configured to obtain link adaptation update information according to a link state; and the sending module 520 is configured to send a block acknowledgment frame to a transmission opportunity holder, where the link adaptation update information is carried in the block acknowledgment frame so that the transmission opportunity holder performs link adaptation according to the link adaptation update information.

The link adaptation update information includes signal-to-noise ratio information of a link, and/or modulation and coding scheme information. The signal-to-noise ratio information includes one or a plurality of: total average signal-to-noise ratio, total average signal-to-noise ratio correction value, average signal-to-noise ratio of each space-time stream, average signal-to-noise ratio correction value of each space-time stream, average signal-to-noise ratio of at least two adjacent space-time streams, and average signal-to-noise correction value of at least two adjacent space-time streams. The modulation and coding scheme information includes one or a plurality of: modulation and coding scheme value, and modulation and coding scheme correction value. The link adaptation update information is carried in a block acknowledgment control field and/or a start sequence control field of the block acknowledgment frame.

Alternatively, the sending module 520 is further configured to send the block acknowledgment frame to the transmission opportunity holder, where the link adaptation update information is carried in a block acknowledgment control field or a start sequence control field of the block acknowledgment frame. Alternatively, the apparatus 500 includes a transmission opportunity responder.

With the apparatus for link adaptation according to the embodiment of the present invention, link adaptation update information is fed back in a block acknowledgment frame so that a transmission opportunity holder is capable of timely and accurately obtaining link adaptation information during data transmission and performing link adaptation accordingly, thereby remarkably improving throughput of a system.

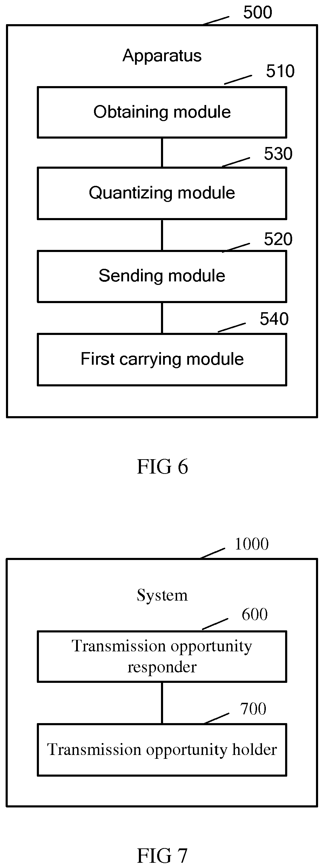

Alternatively, as shown in FIG. 6, the apparatus 500 for link adaptation according to an embodiment of the present invention may further include:
a quantizing module 530, configured to quantize the link adaptation update information; where the sending module 520 is further configured to send the block acknowledgment frame to the transmission opportunity holder, where the quantized link adaptation update information is carried in the block acknowledgment frame.

Alternatively, as shown in FIG. 6, the apparatus 500 according to the embodiment of the present invention may further include:
a first carrying module 540, configured to carry an update information feedback identifier in the block acknowledgment frame, a VHT-SIG A field, or a scrambling seed, where the update information feedback identifier is used to indicate whether to use a link adaptation update information mechanism or is used to indicate a feedback manner of the link adaptation update information.

The above and other operations and/or functions of various modules in the apparatus 500 are described for implementing the corresponding processes in methods 100 and 200 illustrated in FIG. 1 and FIG. 4. For brevity, details are not given herein again.

With the apparatus for link adaptation according to the embodiment of the present invention, link adaptation update information is fed back in a block acknowledgment frame so that a transmission opportunity holder is capable of timely and accurately obtaining link adaptation information during data transmission and performing link adaptation accordingly, thereby remarkably improving throughput of a system.

FIG. 7 shows a schematic diagram of an apparatus 1000 for link adaptation according to an embodiment of the present invention. As shown in FIG. 7, the system 1000 includes a transmission opportunity responder 600 and a transmission opportunity holder 700. The transmission opportunity responder 600 is configured to obtain link adaptation update information and send a block acknowledgment frame to the transmission opportunity holder 700, where the link adaptation update information is carried in the block acknowledgment frame; and the transmission opportunity holder 700 is configured to receive the block acknowledgment frame sent by the transmission opportunity responder 600, and perform link adaptation according to the link adaptation update information in the block acknowledgment frame.

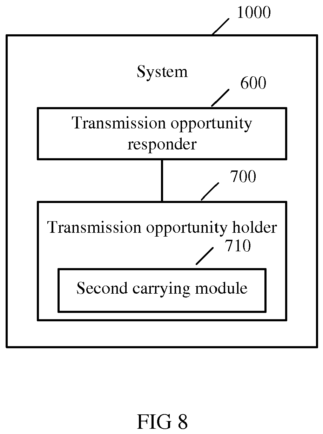

Alternatively, as shown in FIG. 8, the transmission opportunity holder 700 according to an embodiment of the present invention may further include:
a second carrying module 710, configured to carry an update information feedback identifier in a VHT-SIG A field or a scrambling seed, where the update information feedback identifier is used to indicate whether to use a link adaptation update information mechanism or is used to indicate a feedback manner of the link adaptation update information.

The above and other operations and/or functions of various modules in the transmission opportunity responder 600 are similar to those of the apparatus 500 illustrated in FIG. 5 and FIG. 6. In addition, the above and other operations and/or functions of various modules in the transmission opportunity responder 600 and the transmission opportunity holder 700 are described for implementing the corresponding processes in the methods 100 and 200. For brevity, details are not given herein again.

With the system for link adaptation according to the embodiment of the present invention, link adaptation update information is fed back in a block acknowledgment frame so that a transmission opportunity holder is capable of timely and accurately obtaining link adaptation information during data transmission and performing link adaptation accordingly, thereby remarkably improving throughput of the system.

Persons of ordinary skill in the art may be aware that, in combination with the examples described in the embodiments herein, each of the steps in the methods and the units may be implemented by electronic hardware, computer software, or a combination thereof. To clearly describe the interchangeability between the hardware and the software, compositions and steps of each embodiment are generally described above according to functions. Whether the functions are executed by hardware or software depends on particular applications and design constraint conditions of the technical solutions. Person of ordinary skill in the art may use different methods to implement the described functions for each particular application, but it should not be considered that the implementation goes beyond the scope of the present invention.

The methods or steps described in combination with the embodiments disclosed herein may be implemented using hardware, a software program executed by a processor, or a combination thereof. The software program may be placed in a random access memory (RAM), a memory, a read-only memory (ROM), an electrically programmable ROM, an electrically erasable programmable ROM, a register, a hard disk, a removable magnetic disk, a CD-ROM, or a storage medium of any other form well-known in the technical field.

## Claims

1. A method for link adaptation in a wireless local area network according to the IEEE 802.11 standard, comprising:
obtaining (S110) link adaptation update information according to a link state; and
sending (S120) a block acknowledgment frame to a transmission opportunity holder (700), wherein the link adaptation update information is carried in the block acknowledgment frame so that the transmission opportunity holder (700) performs link adaptation according to the link adaptation update information, **characterized by** further comprising:
carrying (S240) an update information feedback identifier in the block acknowledgment frame, a VHT-SIG A field, or a scrambling seed, wherein the update information feedback identifier is used to indicate a feedback manner of the link adaptation update information.

2. The method according to claim 1, further comprising:
quantizing (S220) the link adaptation update information;
wherein carrying the link adaptation update information in the block acknowledgment frame comprises:
carrying the quantized link adaptation update information in the block acknowledgment frame.

3. The method according to claim 1, wherein the link adaptation update information comprises signal-to-noise ratio information of a link, or modulation and coding scheme information.

4. The method according to claim 1, wherein carrying the link adaptation update information in the block acknowledgment frame comprises:
carrying the link adaptation update information in a block acknowledgment control field or a start sequence control field of the block acknowledgment frame.

5. The method according to claim 3, wherein the signal-to-noise ratio information comprises one or a plurality of: total average signal-to-noise ratio, total average signal-to-noise ratio correction value, average signal-to-noise ratio of each space-time stream, average signal-to-noise ratio correction value of each space-time stream, average signal-to-noise ratio of at least two adjacent space-time streams, and average signal-to-noise correction value of at least two adjacent space-time streams.

6. The method according to claim 3, wherein the modulation and coding scheme information comprises one or a plurality of: modulation and coding scheme value, and modulation and coding scheme correction value.

7. An apparatus (500) for link adaptation in a wireless local area network according to the IEEE 802.11 standard, comprising:
an obtaining module (510), configured to obtain link adaptation update information according to a link state; and
a sending module (520), configured to send a block acknowledgment frame to a transmission opportunity holder (700), wherein the link adaptation update information is carried in the block acknowledgment frame so that the transmission opportunity holder (700) performs link adaptation according to the link adaptation update information, **characterized by**
further comprising:
a carrying module (540), configured to carry an update information feedback identifier in the block acknowledgment frame, a VHT-SIG A field, or a scrambling seed, wherein the update information feedback identifier is used to indicate a feedback manner of the link adaptation update information.

8. The apparatus according to claim 7, further comprising:
a quantizing module (530), configured to quantize the link adaptation update information;
wherein the sending module (520) is further configured to send the block acknowledgment frame to the transmission opportunity holder, wherein the quantized link adaptation update information is carried in the block acknowledgment frame.

9. The apparatus according to claim 7, wherein the obtaining module (510) is further configured to obtain the link adaptation update information according to the link state, wherein the link adaptation update information comprises signal-to-noise ratio information of a link, or modulation and coding scheme information

10. The apparatus according to claim 7, wherein the sending module (510) is further configured to send the block acknowledgment frame to the transmission opportunity holder (700), wherein the link adaptation update information is carried in a block acknowledgment control field or a start sequence control field of the block acknowledgment frame.

11. A system for link adaptation in a wireless local area network according to the IEEE 802.11 standard, comprising a transmission opportunity responder (600) and a transmission opportunity holder (700); wherein
the transmission opportunity responder (600) is configured to obtain link adaptation update information and send a block acknowledgment frame to the transmission opportunity holder (700), wherein the link adaptation update information is carried in the block acknowledgment frame; and
the transmission opportunity holder (700) is configured to receive the block acknowledgment frame sent by the transmission opportunity responder (600), and perform link adaptation according to the link adaptation update information in the block acknowledgment frame, **characterized in that** the transmission opportunity holder (700) comprises:
a carrying module (710), configured to carry an update information feedback identifier in a VHT-SIG A field or a scrambling seed, wherein the update information feedback identifier is used to indicate a feedback manner of the link adaptation update information.

## Patentansprüche

1. Verfahren zur Verbindungsanpassung in einem drahtlosen lokalen Netz gemäß dem Standard IEEE 802.11, umfassend:
Abrufen (S110) von Verbindungsanpassungs-Aktualisierungsinformationen gemäß einem Verbindungszustand; und
Senden (S120) eines Blockbestätigungsrahmens an einen Übertragungsmöglichkeitsinhaber (700), wobei die Verbindungsanpassungs-Aktualisierungsinformationen im Blockbestätigungsrahmen übermittelt werden, so dass der Übertragungsmöglichkeitsinhaber (700) Verbindungsanpassung gemäß den Verbindungsanpassungs-Aktualisierungsinformationen durchführt, **dadurch gekennzeichnet, dass** es ferner umfasst:
Übermitteln (S240) einer Aktualisierungsinformations-Rückmeldungskennung in dem Blockbestätigungsrahmen; einem VHT-SIG-A-Feld oder einem Verwürfelungskeim, wobei die Aktualisierungsinformations-Rückmeldungskennung verwendet wird, um eine Rückmeldungsweise der Verbindungsanpassungs-Aktualisierungsinformationen anzugeben.

2. Verfahren nach Anspruch 1, ferner umfassend:
Quantisieren (S220) der Verbindungsanpassungs-Aktualisierungsinformationen;
wobei das Übermitteln der Verbindungsanpassungs-Aktualisierungsinformationen im Blockbestätigungsrahmen umfasst:
Übermitteln der quantisierten Verbindungsanpassungs-Aktualisierungsinformationen im Blockbestätigungsrahmen.

3. Verfahren nach Anspruch 1, wobei die Verbindungsanpassungs-Aktualisierungsinformationen Signal-Rausch-Verhältnis-Informationen einer Verbindung oder Modulations- und Codierungsschemainformationen umfassen.

4. Verfahren nach Anspruch 1, wobei das Übermitteln der Verbindungsanpassungs-Aktualisierungsinformationen im Blockbestätigungsrahmen umfasst:
Übermitteln der Verbindungsanpassungs-Aktualisierungsinformationen in einem Blockbestätigungs-Steuerfeld oder einem Startsequenz-Steuerfeld des Blockbestätigungsrahmens.

5. Verfahren nach Anspruch 3, wobei die Signal-Rausch-Verhältnis-Informationen eines oder mehrere umfassen von: einem durchschnittlichen Signal-Rausch-Gesamtverhältnis, einem Korrekturwert des durchschnittlichen Signal-Rausch-Gesamtverhältnisses, einem durchschnittlichen Signal-Rausch-Verhältnis jedes Raum-Zeit-Stroms, einem Korrekturwert des durchschnittlichen Signal-Rausch-Verhältnisses jedes Raum-Zeit-Stroms, einem durchschnittlichen Signal-Rausch-Verhältnis mindestens zweier benachbarter Raum-Zeit-Ströme und einem durchschnittlichen Signal-Rausch-Korrekturwert mindestens zweier benachbarter Raum-Zeit-Ströme.

6. Verfahren nach Anspruch 3, wobei die Modulations- und Codierungsschemainformationen einen oder mehrere umfassen von: einem Modulations- und Codierungsschemawert, und einem Modulations- und Codierungsschema-Korrekturwert.

7. Vorrichtung (500) zur Verbindungsanpassung in einem drahtlosen lokalen Netz gemäß dem Standard IEEE 802.11, umfassend:
ein Abrufmodul (510), das zum Abrufen von Verbindungsanpassungs-Aktualisierungsinformationen gemäß einem Verbindungszustand konfiguriert ist; und
ein Sendemodul (520), das zum Senden eines Blockbestätigungsrahmens an einen Übertragungsmöglichkeitsinhaber (700) konfiguriert ist, wobei die Verbindungsanpassungs-Aktualisierungsinformationen im Blockbestätigungsrahmen übermittelt werden, so dass der Übertragungsmöglichkeitsinhaber (700) Verbindungsanpassung gemäß den Verbindungsanpassungs-Aktualisierungsinformationen durchführt, **dadurch gekennzeichnet, dass** sie ferner umfasst:
ein Übermittlungsmodul (540), das zum Übermitteln einer Aktualisierungsinformations-Rückmeldungskennung in dem Blockbestätigungsrahmen, einem VHT-SIG-A-Feld oder einem Verwürfelungskeim konfiguriert ist, wobei die Aktualisierungsinformations-Rückmeldungskennung verwendet wird, um eine Rückmeldungsweise der Verbindungsanpassungs-Aktualisierungsinformationen anzugeben.

8. Vorrichtung nach Anspruch 7, ferner umfassend:
ein Quantisierungsmodul (530), das zum Quantisieren der Verbindungsanpassungs-Aktualisierungsinformationen konfiguriert ist;
wobei das Sendemodul (520) ferner zum Senden des Blockbestätigungsrahmens an den Übertragungsmöglichkeitsinhaber konfiguriert ist, wobei die quantisierten Verbindungsanpassungs-Aktualisierungsinformationen im Blockbestätigungsrahmen übermittelt werden.

9. Vorrichtung nach Anspruch 7, wobei das Abrufmodul (510) ferner zum Abrufen der Verbindungsanpassungs-Aktualisierungsinformationen gemäß dem Verbindungszustand konfiguriert ist, wobei die Verbindungsanpassungs-Aktualisierungsinformationen Signal-Rausch-Verhältnis-Informationen einer Verbindung oder Modulations- und Codierungsschemainformationen umfassen.

10. Vorrichtung nach Anspruch 7, wobei das Sendemodul (510) ferner zum Senden des Blockbestätigungsrahmens an den Übertragungsmöglichkeitsinhaber (700) konfiguriert ist, wobei die Verbindungsanpassungs-Aktualisierungsinformationen in einem Blockbestätigungs-Steuerfeld oder einem Startsequenz-Steuerfeld des Blockbestätigungsrahmens übermittelt werden.

11. System zur Verbindungsanpassung in einem drahtlosen lokalen Netz gemäß dem Standard IEEE 802.11, umfassend einen Übertragungsmöglichkeitsbeantworter (600) und einen Übertragungsmöglichkeitsinhaber (700), wobei
der Übertragungsmöglichkeitsbeantworter (600) zum Abrufen von Verbindungsanpassungs-Aktualisierungsinformationen konfiguriert ist und einen Blockbestätigungsrahmen an den Übertragungsmöglichkeitsinhaber (700) sendet, wobei die Verbindungsanpassungs-Aktualisierungsinformationen im Blockbestätigungsrahmen übermittelt werden; und
der Übertragungsmöglichkeitsinhaber (700) zum Empfangen des Blockbestätigungsrahmens konfiguriert ist, der vom Übertragungsmöglichkeitsbeantworter (600) gesendet wird, und Verbindungsanpassung gemäß den Verbindungsanpassungs-Aktualisierungsinformationen im Blockbestätigungsrahmen durchführt, **dadurch gekennzeichnet, dass** der Übertragungsmöglichkeitsinhaber (700) umfasst:
ein Übermittlungsmodul (710), das zum Übermitteln einer Aktualisierungsinformations-Rückmeldungskennung in einem VHT-SIG-A-Feld oder einem Verwürfelungskeim konfiguriert ist, wobei die Aktualisierungsinformations-Rückmeldungskennung verwendet wird, um eine Rückmeldungsweise der Verbindungsanpassungs-Aktualisierungsinformationen anzugeben.

## Revendications

1. Procédé pour une adaptation de liaison dans un réseau local sans fil selon la norme IEEE 802.11, comprenant :
l'obtention (S110) d'informations de mise à jour d'adaptation de liaison selon un état de liaison ; et
l'envoi (S120) d'une trame d'accusé de réception de bloc à un détenteur d'opportunité de transmission (700), dans lequel les informations de mise à jour d'adaptation de liaison sont transportées dans la trame d'accusé de réception de bloc, de sorte que le détenteur d'opportunité de transmission (700) réalise une adaptation de liaison selon les informations de mise à jour d'adaptation de liaison, **caractérisé en ce qu'**il comprend en outre :
le transport (S240) d'un identifiant de retour d'informations de mise à jour dans la trame d'accusé de réception de bloc, dans un champ VHT-SIG A, ou dans un germe de brouillage, dans lequel l'identifiant de retour d'informations de mise à jour est utilisé pour indiquer une manière de retour des informations de mise à jour d'adaptation de liaison.

2. Procédé selon la revendication 1, comprenant en outre :
la quantification (S220) des informations de mise à jour d'adaptation de liaison ;
dans lequel le transport des informations de mise à jour d'adaptation de liaison dans la trame d'accusé de réception de bloc comprend :
le transport des informations de mise à jour d'adaptation de liaison quantifiées dans la trame d'accusé de réception de bloc.

3. Procédé selon la revendication 1, dans lequel les informations de mise à jour d'adaptation de liaison comprennent des informations de rapport signal sur bruit d'une liaison, ou des informations de schéma de modulation et de codage.

4. Procédé selon la revendication 1, dans lequel le transport des informations de mise à jour d'adaptation de liaison dans la trame d'accusé de réception de bloc comprend :
le transport des informations de mise à jour d'adaptation de liaison dans un champ de commande d'accusé de réception de bloc ou un champ de commande de séquence de départ de la trame d'accusé de réception de bloc.

5. Procédé selon la revendication 3, dans lequel les informations de rapport signal sur bruit comprennent l'un ou une pluralité parmi : un rapport signal sur bruit moyen total, une valeur de correction du rapport signal sur bruit moyen total, un rapport signal sur bruit moyen de chaque flux espace-temps, une valeur de correction du rapport signal sur bruit moyen de chaque flux espace-temps, un rapport signal sur bruit moyen d'au moins deux flux espace-temps adjacents, et une valeur de correction du rapport signal sur bruit moyen d'au moins deux flux espace-temps adjacents.

6. Procédé selon la revendication 3, dans lequel les informations de schéma de modulation et de codage comprennent une ou une pluralité parmi : une valeur de schéma de modulation et de codage, et une valeur de correction du schéma de modulation et de codage.

7. Appareil (500) pour une adaptation de liaison dans un réseau local sans fil selon la norme IEEE 802.11, comprenant :
un module d'obtention (510), configuré pour obtenir des informations de mise à jour d'adaptation de liaison selon un état de liaison ; et
un module d'envoi (520), configuré pour envoyer une trame d'accusé de réception de bloc à un détenteur d'opportunité de transmission (700), dans lequel les informations de mise à jour d'adaptation de liaison sont transportées dans la trame d'accusé de réception de bloc, de sorte que le détenteur d'opportunité de transmission (700) réalise une adaptation de liaison selon les informations de mise à jour d'adaptation de liaison, **caractérisé en ce qu'**il comprend en outre :
un module de transport (540), configuré pour transporter un identifiant de retour d'informations de mise à jour dans la trame d'accusé de réception de bloc, dans un champ VHT-SIG A, ou dans un germe de brouillage, dans lequel l'identifiant de retour d'informations de mise à jour est utilisé pour indiquer une manière de retour des informations de mise à jour d'adaptation de liaison.

8. Appareil selon la revendication 7, comprenant en outre :
un module de quantification (530), configuré pour quantifier les informations de mise à jour d'adaptation de liaison ;
dans lequel le module d'envoi (520) est en outre configuré pour envoyer la trame d'accusé de réception de bloc au détenteur d'opportunité de transmission, dans lequel les informations de mise à jour d'adaptation de liaison quantifiées sont transportées dans la trame d'accusé de réception de bloc.

9. Appareil selon la revendication 7, dans lequel le module d'obtention (510) est en outre configuré pour obtenir des informations de mise à jour d'adaptation de liaison selon l'état de liaison, dans lequel les informations de mise à jour d'adaptation de liaison comprennent des informations de rapport signal sur bruit d'une liaison, ou des informations de schéma de modulation et de codage.

10. Appareil selon la revendication 7, dans lequel le module d'envoi (510) est en outre configuré pour envoyer la trame d'accusé de réception de bloc au détenteur d'opportunité de transmission (700), dans lequel les informations de mise à jour d'adaptation de liaison sont transportées dans un champ de commande d'accusé de réception de bloc ou un champ de commande de séquence de départ de la trame d'accusé de réception de bloc.

11. Système pour une adaptation de liaison dans un réseau local sans fil selon la norme IEEE 802.11, comprenant un répondeur d'opportunité de transmission (600) et un détenteur d'opportunité de transmission (700) ; dans lequel
le répondeur d'opportunité de transmission (600) est configuré pour obtenir des informations de mise à jour d'adaptation de liaison et envoyer une trame d'accusé de réception de bloc au détenteur d'opportunité de transmission (700), dans lequel les informations de mise à jour d'adaptation de liaison sont transportées dans la trame d'accusé de réception de bloc ; et
le détenteur d'opportunité de transmission (700) est configuré pour recevoir la trame d'accusé de réception de bloc envoyée par le répondeur d'opportunité de transmission (600), et réaliser une adaptation de liaison selon les informations de mise à jour d'adaptation de liaison dans la trame d'accusé de réception de bloc, **caractérisé en ce que** le détenteur d'opportunité de transmission (700) comprend :
un module de transport (710), configuré pour transporter un identifiant de retour d'informations de mise à jour dans un champ VHT-SIG A, ou un germe de brouillage, dans lequel l'identifiant de retour d'informations de mise à jour est utilisé pour indiquer une manière de retour des informations de mise à jour d'adaptation de liaison.
